# EUROPÄISCHE PATENTSCHRIFT

(11) **EP 1 273 613 B1**
(45) Veröffentlichungstag und Bekanntmachung des Hinweises auf die Patenterteilung: **12.07.2006**
(21) Anmeldenummer: 02011707.3
(22) Anmeldetag: 25.05.2002
(51) Int. Cl.: C08G 77/28, C08G 77/04, C08K 5/548, C08L 21/00

(54) **Oligomere Organosilane, Verfahren zu deren Herstellung und deren Verwendung**
Oligomeric Organosilanes; process for their preparation and their use
Organosilanes oligomères, procédé pour leur fabrication et leur utilisation

(30) Priorität: 06.07.2001 DE 10132941
(43) Veröffentlichungstag der Anmeldung: 08.01.2003
(73) Patentinhaber: Degussa AG, 40474 Düsseldorf (DE)
(72) Erfinder: Luginsland, Hans-Detlef, Dr., 50968 Köln (DE); Hasse, Andre, 52441 Linnich (DE); Radcziwill, Michael, 50321 Brühl (DE); Krafczyk, Roland, Dr., 79618 Rheinfelden (DE)

(56) Entgegenhaltungen:
- EP-A- 0 652 245
- DE-A- 19 825 796

## Beschreibung

Die Erfindung betrifft oligomere Organosilane, ein Verfahren zu deren Herstellung sowie deren Verwendung.

Es ist bekannt, schwefelhaltige Organosiliciumverbindungen wie 3-Mercaptopropyltrimethoxysilan oder Bis-(3-[Triethoxysilyl]-propyl)tetrasulfan als Silanhaftvermittler oder Verstärkungsadditiv in oxidisch gefüllten Kautschukmischungen, unter anderem für Laufflächen und andere Teile von Autoreifen einzusetzen (DE 2 141 159, DE 2 212 239, US 3 978 103, US 4 048 206).

Aus EP 0 784 072 A1 sind Kautschukmischungen auf der Basis mindestens eines Elastomers mit Kieselsäure als Füllstoff und einem Verstärkungsadditiv bekannt, das durch Abmischung oder als < in situ > Reaktionsprodukt aus wenigstens einer funktionellen Polyorganosiloxanverbindung hergestellt wird, und die als weiteren Bestandteil ein funktionelles Organosilan enthalten. Als monomere Bausteine werden insbesondere 3-Mercaptopropyltrialkoxysilane oder Bis(trialkoxysilylpropyl)tetrasulfane, die jeweils 3 beziehungsweise 6 Alkoxysubstituenten tragen, verwendet.

Bei der Herstellung von Kautschukmischung mit Organosilanen und einem Füllstoff, beispielsweise einer gefällten Kieselsäure, vollzieht sich während eines ersten Mischprozesses, beispielsweise in einem Innenmischer, eine chemische Reaktion. Bei dieser chemischen Reaktion handelt es sich um eine Kondensation zwischen dem Organosilan und dem Füllstoff, die mit einer erheblichen Freisetzung von Alkohol verbunden ist. Dieser abgespaltene Alkohol verursacht teilweise erhebliche technische Probleme bei der Weiterverarbeitung der Kautschukmischungen, wie Mischungsporosität bei der Extrusion oder unerwünschter Blasenbildung im Kautschuk selbst. Desweiteren ist eine Reduktion der Freisetzung von Alkohol während der Umsetzung aus Gesundheits- und Umweltsgründen erwünscht.

Es ist bekannt, daß diese Nachteile weitgehend durch den Einsatz von oligomeren Organosilanpolysulfane anstelle der bisher verwendeten monomeren schwefelhaltigen Organosiliciumverbindungen, vermieden werden können.

Aus EP 0964021 sind oligomere Organosilane, die aus verschiedenen Struktureinheiten A und/oder B und/oder C 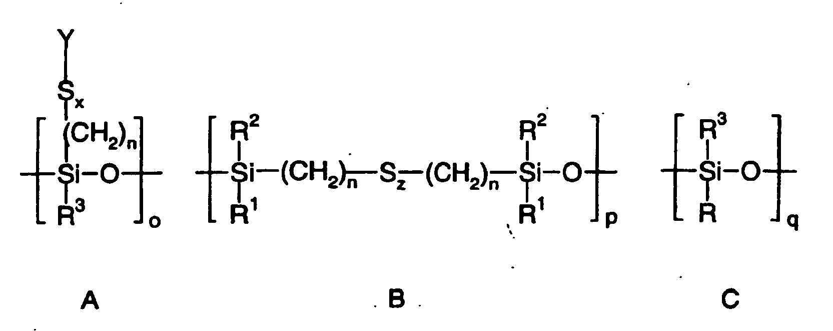 aufgebaut sind, bekannt.

Ein Nachteil der bekannten oligomeren Organosilane ist das schlechte Verstärkungsverhältnis in Kautschukmischungen.

Aufgabe der vorliegenden Erfindung ist es, oligomere Organosilane herzustellen, die in Kautschukmischungen ein verbessertes Verstärkungsverhältnis besitzen und aufgrund der Oligomerisierung zu einer reduzierten Ethanolfreisetzung während des Mischprozesses und den nachfolgenden Verarbeitungsschritten führen.

Gegenstand der Erfindung sind oligomere Organosilane, welche dadurch gekennzeichnet sind, daß sie aus den 2 Struktureinheiten A und B, gemäß der Formel I, 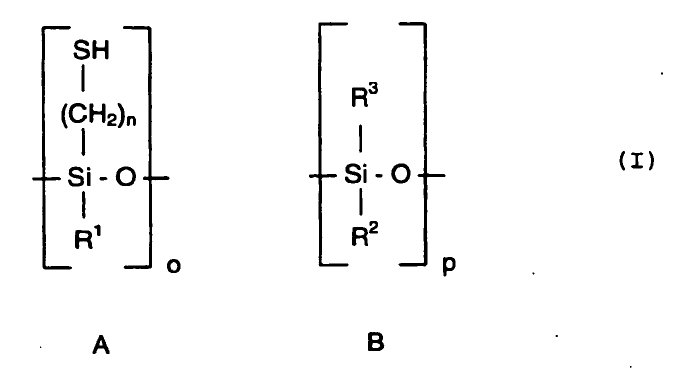 aufgebaut sind,
wobei R¹, R² eine (C₁-C₄)Alkoxy-Gruppe, vorzugsweise Methoxy- oder Ethoxy-Gruppe,
R³ eine Propyl, Oktyl- oder Hexadecyl-Gruppe;
n gleich 1 - 8, vorzugsweise 3, und
o und p jeweils eine ganze, positive Zahl von 1 - 40 bedeuten,
mit p/o gleich 0,2/1 bis 6/1, ist.

Bei R₃ = C₁-C₅ kann p/o vorzugsweise 2/1 bis 5/1,
bei R₃ = C₆-C₈ kann p/o vorzugsweise 0,5/1 bis 3/1 und
bei R₃ = C₉-C₂₀ kann p/o vorzugsweise 0,2/1 bis 2/1 sein.

Die oligomeren Organosilane können sowohl als einzelne Verbindung mit einem definierten Molekulargewicht als auch als Oligomerengemisch mit einer Molekulargewichtsverteilung vorliegen.

Die oligomeren Organosilane können Molekulargewichte zwischen 200 und 16000 g/mol aufweisen. Bevorzugt können die erfindungsgemäßen oligomeren Organosilane Molekulargewichte zwischen 400 und 5000 g/mol aufweisen.

Ein weiterer Gegenstand der Erfindung ist ein Verfahren zur Herstellung der erfindungsgemäßen oligomeren Organosilane, welches dadurch gekennzeichnet ist, daß man die monomeren Verbindungen des Strukturtyps I und II 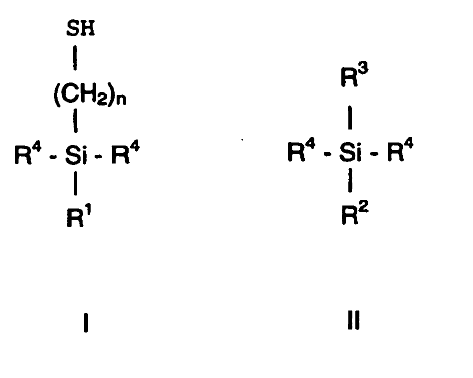 in denen R¹, R², R³ und n die oben angegebene Bedeutung aufweisen und
R⁴ (C₁-C₄)Alkoxy-Gruppe, vorzugsweise Methoxy- oder Ethoxy-Gruppe, ist, wobei R⁴ gleich oder verschieden sein kann, mischt und anschließend cooligomerisiert.

Dabei können im Rahmen der oben angegebenen Strukturtypen I und II strukturell beliebige Organosiliciumverbindungen mit unterschiedlich langen Sequenzen der beiden Struktureinheiten gebildet werden.

Die Reaktion kann in einem Lösungsmittel und/oder gegebenenfalls mit Hilfe eines Katalysators, bei einer Reaktionstemperatur zwischen 0°C und 150°C cooligomerisiert werden.

Als Organosiliciumverbindung der Struktureinheit I können Mercaptopropyltriethoxysilan, Mercaptopropyltrimethoxysilan oder Mercaptopropylmethyldiethoxysilan verwendet werden.

Als Organosiliciumverbindung der Struktureinheit II können Propyltriethoxysilan, Propyltrimethoxysilan, Oktyltriethoxysilan, Oktyltrimethoxysilan, Hexadecyltriethoxysilan oder Hexadecyltrimethoxysilan verwendet werden.

Die Cooligomerisation kann bei Zugabe von Wasser unter Abspaltung von Alkohol in Substanz oder in einem inerten organischen Lösungsmittel oder Gemischen davon, wie beispielsweise in einem aromatischen Lösungsmittel, wie Chlorbenzol, einem halogenierten Kohlenwasserstoff, wie Chloroform, Methylenchlorid, einem Ether wie Diisopropylether, tert. Butylmethylether, Tetrahydrofuran oder Diethylether, Acetonitril oder Carbonsäureester, beispielsweise Essigsäureethylester, Essigsäuremethylester oder Essigsäureisopropylester, einem Alkohol, beispielsweise Methanol, Ethanol, n-Propanol, i-Propanol, n-Butanol, sec. Butanol oder tert. Butanol durchgeführt werden. Bevorzugte Lösungsmittel können Ethanol oder Essigsäureethylester sein.

Die Umsetzung kann katalysiert erfolgen. Der Katalysator kann dabei in katalytischen oder stöchiometrischen Mengen zugesetzt werden. Dabei sind alle Arten von sauren, basischen oder nukleophilen Katalysatoren, die dem Fachmann von der SOLGEL-Chemie von Alkoxysilanen bekannt sind (siehe z.B. R. Corriu, D. Leclercq, Angew. Chem. **1996,** *108,* 1524-1540) auch für die Oligomerisierung im Sinne der Erfindung geeignet. Die Katalysatoren können in gleicher Phase wie die Reaktionslösung vorliegen (homogene Katalyse) oder als Feststoffe vorliegen (heterogene Katalyse) und nach beendeter Reaktion abgetrennt werden.

Bei der Katalyse kann ein saurer, basischer oder nukleophiler Katalysator eingesetzt werden.

Die basische Katalyse kann beispielsweise mit einer organischen Base wie Triethylamin, Tetramethylpiperidin, Tributylamin oder Pyridin oder mit einer anorganischen Base wie NaOH, KOH, Ca(OH)₂, Na₂CO₃, K₂CO₃, CaCO₃, CaO, NaHCO₃, KHCO₃ oder Alkoholaten wie NaOCH₃ oder NaOC₂H₅ erfolgen.

Die nukleophile Katalyse kann mit Aluminiumoxid oder beliebigen Fluoriden geschehen, beispielsweise Ammoniumfluorid, Natriumfluorid, Kaliumfluorid, oder beliebigen Tetraalkylammoniumfluoriden wie Tetrabutylammoniumfluorid.

Die saure Katalyse kann mit verdünnten wäßrigen Mineralsäuren oder Lösungen von Lewissäuren in Wasser erfolgen. Als Lewissäure kann beispielsweise Tetrabutylorthotitonat eingesetzt werden.

Bevorzugt ist die Katalyse mit verdünnter wäßrigen NaOH oder einer Lösung von Ammoniumfluorid in Wasser, wobei 1 mol-% Katalysator auf die eingesetzte Wassermenge verwendet wird.

Zur Katalyse können geeignete Mengen an Methanol zugegeben werden.

Die Reaktionsbedingungen, insbesondere die zuzugebende Wassermenge, können so gewählt werden, daß die Reaktionsprodukte nicht zu einem Feststoff polykondensieren.

Nach erfolgter Reaktion können die leichtflüchtigen Bestandteile entfernt und der Katalysator in üblicherweise desaktiviert beziehungsweise entfernt werden.

Ein weiterer Gegenstand der Erfindung sind Kautschukmischungen, welche dadurch gekennzeichnet sind, daß sie Kautschuk, Füllstoff, wie beispielsweise gefällte Kieselsäure, ggf. weitere Kautschukhilfsmittel, sowie mindestens ein erfindungsgemäßes oligomeres Organosilan enthalten.

Das erfindungsgemäße oligomere Organosilan kann in Mengen von 0,1 bis 15 Gew-%, bezogen auf die Menge des eingesetzten Kautschuks, eingesetzt werden.

Die Zugabe der erfindungsgemäßen oligomeren Organosilane sowie die Zugabe der Füllstoffe kann bevorzugt bei Massetemperaturen von 100 bis 200 °C erfolgen. Sie kann jedoch auch später bei tieferen Temperaturen (40 bis 100 °C) zum Beispiel zusammen mit weiteren Kautschukhilfsmitteln erfolgen.

Die oligomeren Organosilane können sowohl in reiner Form als auch aufgezogen auf einen inerten organischen oder anorganischen Träger dem Mischprozeß zugegeben werden. Bevorzugte Trägermaterialien sind Kieselsäuren, natürliche oder synthetische Silikate, Aluminiumoxid oder Ruße.

Als Füllstoffe können für die erfindungsgemäßen Kautschukmischungen die folgenden Füllstoffe eingesetzt werden:
- Ruße: Die hierbei zu verwendenden Ruße sind nach dem Flammruß-, Furnace- oder Gasruß-Verfahren hergestellt und besitzen BET-Oberflächen von 20 bis 200 m²/g, wie z.B.SAF-,ISAF-, HSAF-, HAF-, FEF- oder GPF-Ruße. Die Ruße können ggf. auch Heteroatome wie z.B. Si enthalten.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silikate, wie Aluminiumsilikat, Erdalkalisilikate wie Magnesiumsilikat oder - Calciumsilikat, mit BET-Oberflächen von 20 bis 400 m²/g und Primärteilchendurchmessern von 10 bis 400 nm.
- Natürliche Silikate, wie Kaolin und andere natürlich vorkommende Kieselsäuren.
- Glasfasern und Glasfaserprodukte (Matten, Stränge) oder Mikroglaskugeln.

Bevorzugt können Ruße mit BET-Oberflächen von 20 bis 400 m²/g oder hochdisperse Kieselsäuren, hergestellt durch Fällung von Lösungen von Silikaten, mit BET-Oberflächen von 20 bis 400 m²/g in Mengen von 5 bis 150 Gew.-Teilen, jeweils bezogen auf 100 Teile Kautschuk, eingesetzt werden.

Die genannten Füllstoffe können alleine oder im Gemisch eingesetzt werden. In einer besonders bevorzugten Ausführung des Verfahrens können 10 bis 150 Gew.-Teile helle Füllstoffe, gegebenenfalls zusammen mit 0 bis 100 Gew.-Teilen Ruß, sowie 0,3 bis 10 Gew.-Teile einer Verbindung der erfindungsgemäßen oligomeren Organosilane, jeweils bezogen auf 100 Gew.-Teile Kautschuk, zur Herstellung der Mischungen eingesetzt werden.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u. a.
- Polybutadien (BR)
- Polyisopren (IR)
- Styrol/Butadien-Copolymerisate mit Styrolgehalten von 1 bis 60, vorzugsweise 2 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- teilhydrierter oder vollständig hydrierter NBR-Kautschuk (HNBR)
- Ethylen/Propylen/Dien-Copolymerisate (EPDM)
sowie Mischungen dieser Kautschuke. Für die Herstellung von Kfz-Reifen sind insbesondere anionisch polymerisierte L-SBR-Kautschuke mit einer Glastemperatur oberhalb von -50 °C sowie deren Mischungen mit Dienkautschuken von Interesse.

Die erfindungsgemäßen Kautschukvulkanisate können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Kautschukindustrie bekannt sind.

Die Kautschukhilfsmittel können in bekannten Mengen, die sich unter anderem nach dem Verwendungszweck richten, eingesetzt werden. Übliche Mengen sind z.B. Mengen von 0,1 bis 50 Gew.-%, bezogen auf Kautschuk. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel werden in Mengen von 0,1 bis 10 Gew.-%, bevorzugt 0.1 bis 5 Gew.-%, bezogen auf Kautschuk, eingesetzt.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und den erfindungsgemäßen oligomeren Silanen (I) kann in bekannten Mischaggregaten, wie Walzen, Innenmischern und Mischextrudern, durchgeführt werden.

Die erfindungsgemäßen Kautschukmischungen eignen sich zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

Die erfindungsgemäßen oligomeren Organosilane zeigen die Vorteile eines niedrigen Rollwiderstands (korreliert mit tan δ 60°C), verbesserten Abriebwiderstands, verbessertes Anscorchverhaltens und höheren Verstärkungsfaktors (M300/M100).

### Beispiele:

### Herstellung der oligomeren Organosilanpolysulfane

### Beispiel 1:

92,0 g (0,38 mol) 3-Mercaptopropyltriethoxysilan (MPTES, Dynasylan 3201, Degussa AG), 412,0 g (2 mol) Propyltriethoxysilan (PTES, VP Si203, Degussa AG), 51,8 g Wasser, 132,0 g Ethanol, 5,0 g Methanol und 0,2 g Salzsäure (37%ig) werden in einem 1L Rundkolben unter Rühren gemischt. Anschließend wird das Lösungsmittel am Rotationsverdampfer im Vakuum entfernt. Die leichtflüchtigen Bestandteile werden bei der anschließenden Trocknung im Vakuum entfernt. Man erhält ein Produkt mit einem Schwefelgehalt von 3,94 %.

### Vergleichsbeispiel 1 gemäß EP 0964021:

133 g (0.25 mol) Bis-(3-[Triethoxysilyl]-propyl)tetrasulfan (TESPT, Si69, Degussa AG) und 44.0 g (0,21 mol) Propyltriethoxysilan (PTES) werden mit 1 mL Tetrabutylorthotitanat in einem 500 mL Rundkolben unter Rühren bei 80°C vorgelegt. Anschließend werden 8.50 g (0,47 mol) H₂O, in 10 mL Ethanol p.a. aufgenommen und unter Rühren langsam zugegeben. Nach beendeter Zugabe wird 1 Stunde bei 80°C nachgerührt, dann das Ethanol bei 80°C und 500 - 300 mbar abdestilliert. Anschließend wird das Restflüchtige bei 80°C/30 mbar entfernt. Man erhält ein öliges Produkt mit 1,85 Ethoxygruppen pro Si-Einheit (nach ¹H-NMR) und einem Glührückstand von 28,8 %.

### Vergleichsbeispiel 2 gemäß EP 0964021:

Die Herstellung erfolgt analog zu Vergleichsbeispiel 1 mit der Änderung, daß anstatt von PTES, hier 31,0 g (0,21 mol) Dimethyldiethoxysilan (DMDES, Gelest), eingesetzt werden. Das erhaltene ölige Produkt weist laut ¹H-NMR 1,60 Ethoxygruppen pro Si-Einheit auf. Der Glührückstand beträgt 30,3 %.

### Beispiel 2:

In einem 1L-Vierhalskolben mit Rührer werden ein Gemisch aus 120,0 g (0,50 mol) 3-Mercaptopropyltriethoxysilan (MPTES) und 225,0 g (1,09 mol) Propyltriethoxysilan (PTES) vorgelegt. Innerhalb einer Stunde werden eine Lösung bestehend aus 17,2 g Wasser, 5,0 g Methanol und 0,4 g konz. Salzsäure in 100 mL Ethanol zugetropft. Nach zweistündigem Erhitzen am Rückfluß werden das Lösungsmittel und alle flüchtigen Bestandteile bei 110°C am Hochvakuum entfernt. Man erhält 250,5 g einer viskosen Flüssigkeit.

Das Produkt hat einen Schwefelgehalt von 6,8 % und ein Glührückstand von 36,4 %.

### Beispiel 3:

In einem 1L-Vierhalskolben mit Rührer werden ein Gemisch aus 120,0 g (0,50 mol) 3-Mercaptopropyltriethoxysilan (MPTES) und 125,0 g (0,45 mol) Oktyltriethoxysilan (OTES, VP Si208, Degussa AG) vorgelegt. Innerhalb einer Stunde werden eine Lösung bestehend aus 5,3 g Wasser, 5,0 g Methanol und 1,5 g konz. Salzsäure in 60 mL Ethanol zugetropft. Nach 4,5-stündigem Erhitzen am Rückfluß werden das Lösungsmittel und alle flüchtigen Bestandteile bei 110°C am Hochvakuum entfernt. Man erhält 197,1 g einer viskosen Flüssigkeit.

Das Produkt hat einen Schwefelgehalt von 7,5 % und ein Glührückstand von 27,1 %.

### Beispiel 4:

In einem 1L-Vierhalskolben mit Rührer werden ein Gemisch aus 120,0 g (0,50 mol) 3-Mercaptopropyltriethoxysilan (MPTES) und 80,0 g (0,20 mol) Hexadecyltriethoxysilan (HDTES, VP Si216, Degussa AG) vorgelegt. Innerhalb einer Stunde werden eine Lösung bestehend aus 4,0 g Wasser, 5,0 g Methanol und 0,37g konz. Salzsäure in 45 mL Ethanol zugetropft. Nach vierstündigem Erhitzen am Rückfluß werden das Lösungsmittel und alle flüchtigen Bestandteile bei 120°C am Hochvakuum entfernt. Man erhält 156,0 g einer viskosen Flüssigkeit.

Das Produkt hat einen Schwefelgehalt von 8,7 % und ein Glührückstand von 22,8 %.

### Herstellung der Kautschukmischungen und Vulkanisate

### Beispiel 5:

In Beispiel 5 wird eine Mischung mit dem erfindungsgemäßen oligomeren Organosilan gemäß Beispiel 1 mit den in-situ Mischungen aus Si 69, aus Si 263 / Si 203 und den Vergleichssilanen gemäß EP 0964021 (Vergleichsbeispiel 1 und 2) hergestellt.

Die für die Kautschukmischungen 1 bis 5 verwendete Rezeptur ist in der Tabelle 1 angegeben. Dabei bedeutet die Einheit phr Gewichtsanteile bezogen auf 100 Teile des eingesetzten Rohkautschuks. Bei den Mischungen 2 und 5 mit 3-Mercaptopropyltriethoxysilan (MPTES) beziehungsweise dem erfindungsgemäßen oligomeren Organosilan muß der Schwefelgehalt von 1,5 auf 2,2 erhöht werden, um den im Si69 enthaltenden polysulfidischen Schwefel Rechnung zu tragen. Das allgemeine Verfahren zur Herstellung von Kautschukmischungen und deren Vulkanisate ist in dem folgenden Buch beschrieben: "Rubber Technology Handbook", W. Hofmann, Hanser Verlag 1994.

**Tabelle 1**

| | Mischung 1 | Mischung 2 | Mischung 3 | Mischung 4 | Mischung 5 |
|---|---|---|---|---|---|
| Substanz | Menge [phr] | | | | |
| 1. Stufe | | | | | |
| Buna VSL 5025-1 96,0 | 96,0 | 96,0 | 96,0 | 96,0 | 96,0 |
| Buna CB 24 | 30,0 | 30,0 | 30,0 | 30,0 | 30,0 |
| Ultrasil 7000 GR | 80,0 | 80,0 | 80,0 | 80,0 | 80,0 |
| ZnO | 3,0 | 3,0 | 3,0 | 3,0 | 3,0 |
| Stearinsäure | 2,0 | 2,0 | 2,0 | 2,0 | 2,0 |
| Vulkanox 4020 | 1,5 | 1,5 | 1,5 | 1,5 | 1,5 |
| Protector G35P | 1,0 | 1,0 | 1,0 | 1,0 | 1,0 |
| Si69 | 6,4 | - | - | - | - |
| Dynasylan 3201 | - | 5 | - | - | - |
| VP Si203 | - | 1 | - | - | - |
| Vergleichsbeispiel 1 gemäß EP 0964021 | - | - | 6,4 | - | - |
| Vergleichsbeispiel 2 gemäß EP 0964021 | - | - | - | 6,4 | - |
| Beispiel 1 | - | - | - | - | 6, 4 |

| 2. Stufe | | | | | |
|---|---|---|---|---|---|
| Batch Stufe 1 | | | | | |
| | | | | | |

| 3. Stufe | | | | | |
|---|---|---|---|---|---|
| Batch Stufe 2 | | | | | |
| Vulkacit D | 2,0 | 2,0 | 2,0 | 2,0 | 2,0 |
| TBzTD | 0,2 | 0,2 | - | - | 0,2 |
| CZ | 1,5 | 1,5 | 1,5 | 1,5 | 1,5 |
| Schwefel | 1,5 | 2,2 | 1,5 | 1,5 | 2,2 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Von dem Butadien sind 73 % 1,2, 10 % cis 1,4 und 17 % trans 1,4 verknüpft. Das Copolymer enthält 37,5 phr Öl und weist eine Mooney-Viskosität (ML 1+4/100°C) von etwa 50 auf.

Bei dem Polymer Buna CB 24 handelt es sich um ein cis 1,4 Polybutadien der Bayer AG mit cis 1,4-Gehalt von > 96 %, einem 1,2-Gehalt von < 2 % und einer Mooney-Viskosität von 44 ±5.

Die Kieselsäure Ultrasil 7000 GR der Degussa-Hüls AG besitzt eine BET-Oberfläche von 175 m²/g.

Si69 ist (Bis-(3-[Triethoxysilyl]-propyl)tetrasulfan), VP Si203 ist Propyltriethoxysilan und Dynasylan 3201 ist 3-Mercaptopropyltriethoxysilan der Firma Degussa AG.

Als aromatisches Öl wird Naftolen ZD der Chemetall verwendet; bei Vulkanox 4020 handelt es sich um PPD der Bayer AG und Protektor G35P ist ein Ozonschutzwachs der HB-Fuller GmbH. Vulkacit D (DPG) und Vulkacit CZ (CBS) sind Handelsprodukte der Bayer AG. TBzTD ist ein Handelsprodukt der Flexis S.A..

Die Kautschukmischungen werden in einem Innenmischer entsprechend der Mischvorschrift in Tabelle 2 hergestellt.

**Tabelle 2**

| **Stufe 1** | |
|---|---|
| **Einstellungen** | |
| Mischaggregat | Werner & Pfleiderer E-Typ |
| Drehzahl | 70 min⁻¹ |
| Stempeldruck | 5,5 bar |
| Leervolumen | 1,58 L |
| Füllgrad | 0,56 |
| Durchflußtemp. | 70 °C |

| **Mischvorgang** | |
|---|---|
| 0 bis 1 min | Buna VSL 5025-1 + Buna CB 24 |
| 1 bis 3 min | 1/2 Kieselsäure, ZnO, Stearinsäure, Naftolen ZD, Silane |
| 3 bis 4 min | 1/2 Kieselsäure, Vulkonox 4020, Protektor G35P |
| 4 min | Säubern |
| 4 bis 5 min | Mischen |
| 5 min | Säubern |
| 5 bis 6 min | mischen und ausfahren |
| Batch-Temp. | 145-150°C |
| Lagerung | 24 h bei Raumtemperatur |

| **Stufe 2** | |
|---|---|
| **Einstellungen** | |
| Mischaggregat | Wie in Stufe 1 bis auf: |
| Drehzahl | 80 min⁻¹ |
| Durchflußtemp. | 80 °C |
| Füllgrad | 0,53 |

| **Mischvorgang** | |
|---|---|
| 0 bis 2 min | Batch Stufe 1 aufbrechen |
| 2 bis 5 min | Batchtemperatur 150°C durch Drehzahlvariation halten |
| 5 min | Ausfahren |
| Batch-Temp. | 140-145°C |
| Lagerung | 4 h bei Raumtemperatur |

| **Stufe 3** | |
|---|---|
| **Einstellungen** | |
| Mischaggregat | wie in Stufe 1 bis auf |
| Drehzahl | 40 min⁻¹ |
| Füllgrad | 0,51 |
| Durchflußtemp. | 50 °C |

| **Mischvorgang** | |
|---|---|
| 0 bis 2 min | Batch Stufe 2, Beschleuniger, Schwefel |
| 2 min | Ausfahren und auf Labormischwalzwerk Fell bilden (Durchmesser 200 mm, Länge 450 mm, Durchflußtemperatur 50°C) |
| | Homogenisieren: |
| | 3* links, 3* rechts einschneiden und umklappen sowie |
| | 8* bei engem Walzenspalt (1 mm) und 3* bei weitem Walzenspalt (3,5 mm) stürzen |
| | Fell ausziehen. |

Die Vulkanisationszeit für die Prüfkörper beträgt 60 Minuten bei 165°C.

Die gummitechnische Prüfung erfolgt gemäß den in Tabelle 3 angegebenen Prüfmethoden.

**Tabelle 3**

| Physikalische Testung | Norm/ Bedingungen |
|---|---|
| ML 1+4, 100°C | DIN 53523/3, ISO 667 |
| Vulkameterprüfung, 165°C | DIN 53529/3, ISO 6502 |
| Zugversuch am Ring, 23°C | DIN 53504, ISO 37 |
| Zugfestigkeit | |
| Spannungswerte | |
| Bruchdehnung | |
| Shore-A-Härte, 23°C | DIN 53 505 |
| Ball-Rebound, 0 und 60°C | ASTM D 5308 |
| Viskoelast. Eigen., 0 und 60°C DIN 53 513, ISO 2856 | |
| E* | |
| tan δ | |
| DIN-Abrieb, 10 N Kraft | DIN 53 516 |
| Dispersion | ISO/DIS 11345 |

### Herstellung der Kautschukmischungen und Vulkanisate

Die Ergebnisse für die Rohmischungen und Vulkanisate sind in Tabelle 4 enthalten.

**Tabelle 4**

| Merkmal: | Einheit | Mischung 1 | Mischung 2 | Mischung 3 | Mischung 4 | Mischung 5 |
|---|---|---|---|---|---|---|
| Rohmischungsergebnisse | | | | | | |
| ML(1+4) bei 100°C | [ME] | 58 | 80 | 65 | 66 | 60 |
| Mooney-Scorch 130°C, t5 | [min] | 26,9 | 2,1 | - | - | 27,5 |
| Dmax-Dmin (MDR, 165°C) | [dNm] | 15,7 | 10,8 | 18,9 | 18,2 | 14,5 |
| t 10% (MDR, 165°C) | [min] | 1,3 | 0,3 | 1,9 | 1,9 | 2,0 |
| t 90% (MDR, 165°C) | [min] | 7,6 | 4,4 | 24,3 | 25,4 | 4,9 |

| Vulkanisatergebnisse | | | | | | |
|---|---|---|---|---|---|---|
| Zugfestigkeit | [MPa] | 14,0 | 12,6 | 14,1 | 15,6 | 14,4 |
| Spannungswert 100% | [MPa] | 1,4 | 1,6 | 2,7 | 2,6 | 1,8 |
| Spannungswert 300% | [MPa] | 6,6 | 10,1 | 12,5 | 11,7 | 10,1 |
| Spannungswert 300%/100% | [-] | 4,7 | 6,2 | 4,6 | 4,5 | 5,8 |
| Bruchdehnung | [%] | 460 | 340 | 330 | 360 | 380 |
| Shore-A-Härte | [SH] | 61 | 57 | 66 | 66 | 59 |
| Ball-Rebound (0°C) | [%] | 12,5 | 10,0 | 10,1 | 10,5 | 8,7 |
| Ball-Rebound (60°C) | [%] | 57,4 | 68,0 | 63,2 | 63,0 | 66,2 |
| Verlustfaktor tan δ (0°C) | [-] | 0,468 | 0,435 | 0,496 | 0,500 | 0,507 |
| Verlustfaktor tan δ (60°C) | [-] | 0,147 | 0,107 | 0,105 | 0,111 | 0,098 |

Die Mischung mit dem erfindungsgemäßen oligomeren Organosilan (Mischung 5) hat einen deutlich höheren Verstärkungsfaktor (Spannungswert 300%/100%) als die mit den Organosilanpolysulfanen, hergestellt nach EP 0964021 (Beispiel 3/4), und der Si69-Referenz (Mischung 1).

Ferner hat die Mischung mit dem erfindungsgemäßen oligomeren Organosilan (Mischung 5) den höchsten tan δ 0°C-Wert (verbessertes Naßrutschen) und den niedrigsten tan δ 60°C-Wert (verbesserter Rollwiderstand).

Mischung 2 ist aufgrund der extrem kurzen t 10%-Zeit nur schwer zu verarbeiten und damit nicht praxistauglich.

### Beispiel 6:

Beispiel 6 vergleicht die erfindungsgemäßen oligomeren Organosilane der Beispiele 2 bis 4 mit einer entsprechenden Si 69 in-situ Referenz. Die verwendete Rezeptur entspricht der in Tabelle 1 (Mischung 3), wobei die Silane entsprechend Tabelle 5 zugegeben werden. Dabei wird die Menge des oligomeren Organosilans so gewählt, daß die Anzahl der Siliziumeinheiten in den Mischungen 7 bis 9 gleich ist. Der Schwefelgehalt für die Referenzmischung liegt bei 1,5 phr, der für die Mischungen 7 bis 9 mit den oligomeren Organosilanen bei 2,3 phr.

Die Kautschukmischungen werden, wie in Tabelle 2 aufgeführt, hergestellt und die Prüfkörper bei 165°C vulkanisiert. Die Vulkanisationszeit für die Referenzmischung 6 beträgt 25 Minuten, die für die Mischungen 7 bis 9 je 20 Minuten.

Die gummitechnische Prüfung erfolgt gemäß den in Tabelle 3 angegebenen Prüfmethoden.

Die Ergebnisse für die Rohmischungen und Vulkanisate sind in Tabelle 5 enthalten.

**Tabelle 5**

| | | **Mischung 6** | **Mischung 7** | **Mischung 8** | **Mischung9** |
|---|---|---|---|---|---|
| Si 69 | [phr] | 6,4 | - | - | - |
| Beispiel 2 | [phr] | - | 5,2 | - | - |
| Beispiel 3 | [phr] | - | - | 4,2 | - |
| Beispiel 4 | [phr] | - | - | - | 3,0 |

| **Rohmischungsergebnisse** | | **Mischung 6** | **Mischung 7** | **Mischung 8** | **Mischung 9** |
|---|---|---|---|---|---|
| ML (1+4) | [ME] | 59 | 60 | 59 | 57 |
| Dmax-Dmin | [dNm] | 15,3 | 12,4 | 12,1 | 12,6 |
| t 10% | [min] | 1,7 | 1,2 | 1,1 | 1,3 |
| t 90% | [min] | 11,4 | 7,3 | 12,2 | 18,5 |

| **Vulkanisatergebnisse** | | **Mischung 6** | **Mischung 7** | **Mischung 8** | **Mischung 9** |
|---|---|---|---|---|---|
| Zugfestigkeit | [MPa] | 16,0 | 13,1 | 13,1 | 15,1 |
| Spannungswert 100% | [MPa] | 1,8 | 1,8 | 1,6 | 1,4 |
| Spannungswert 300% | [MPa] | 9,7 | 12,4 | 11,2 | 9,2 |
| Spannungswert 300%/100% | [MPa] | 5,3 | 6,9 | 7,0 | 6,6 |
| Bruchdehnung | [%] | 410 | 310 | 330 | 400 |
| Shore-A-Härte | [SH] | 61 | 57 | 55 | 55 |
| Ball-Rebound, 60°C | [%] | 62,9 | 69,2 | 68,9 | 67,8 |
| DIN-Abrieb | [mm³] | 80 | 61 | 63 | 69 |
| Dyn. Dehnmodul E*, 0°C | [MPa] | 12,7 | 11,3 | 10,8 | 11,1 |
| Dyn. Dehnmodul E*, 60°C | [MPa] | 6,4 | 6,1 | 5,8 | 5,7 |
| Verlustfaktor tan δ, 0°C | [-] | 0,452 | 0,44 | 0,446 | 0,445 |
| Verlustfaktor tan δ, 60°C | [-] | 0,122 | 0,088 | 0,092 | 0,105 |
| Dispersion Phillips | [-] | 8 | 8 | 8 | 8 |

Wie man anhand der Daten in Tabelle 5 sieht, zeigen die erfindungsgemäßen oligomeren Organosilane ein erhöhtes Verstärkungsverhältnis Spannungswert 300%/100%, einen verringerten DIN-Abrieb und ein niedriger Hystereseverlust tan δ, der mit dem Rollwiderstand korreliert.

## Patentansprüche

1. Oligomere Organosilane, **dadurch gekennzeichnet, daß** sie aus den 2 Struktureinheiten A und B, gemäß der Formel I, 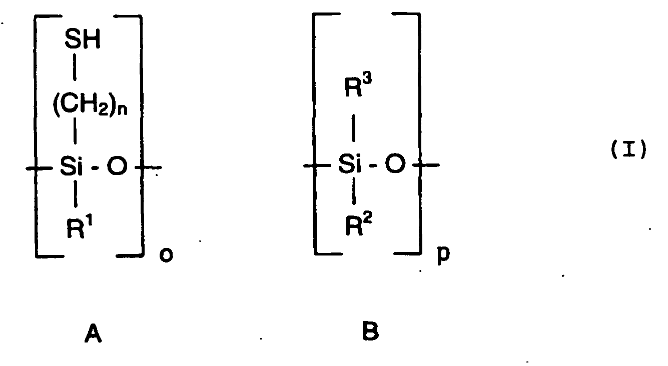 aufgebaut sind,
worin R¹, R² eine (C₁-C₄)Alkoxy-Gruppe;
R³ eine Propyl-, Oktyl- oder Hexadecyl-Gruppe,
n gleich 1 - 8, und
o und p jeweils eine ganze, positive Zahl von 1 - 40 bedeuten,
mit p/o gleich 0,2/1 bis 6/1 ist.

2. Oligomere Organosilane gemäß Anspruch 1,
**dadurch gekennzeichnet,**
**daß** das oligomere Organosilan ein Molekulargewicht zwischen 200 und 16000 g/mol aufweist.

3. Verfahren zur Herstellung der erfindungsgemäßen oligomeren Organosilane gemäß Anspruch 1, **dadurch gekennzeichnet, daß** man die monomeren Verbindungen des Strukturtyps I und II 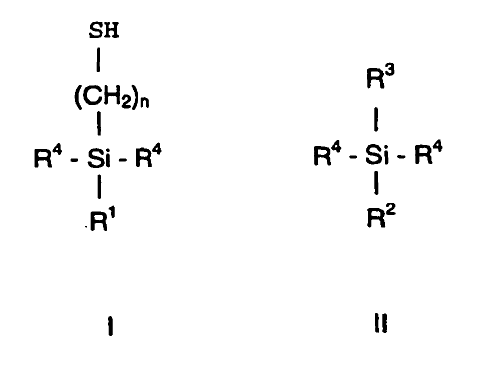 in denen R¹, R², R³ und n die oben angegebene Bedeutung aufweisen und
R⁴ (C₁-C₄)Alkoxy-Gruppe ist, wobei R⁴ gleich oder verschieden sein kann,
mischt und anschließend cooligomerisiert.

4. Verfahren gemäß Anspruch 3,
**dadurch gekennzeichnet,**
**daß** man als Verbindung des Strukturtyps I Mercaptopropyltriethoxysilan verwendet.

5. Verfahren gemäß Anspruch 3,
**dadurch gekennzeichnet,**
**daß** man als Verbindung des Strukturtyps II Propyltriethoxysilan verwendet.

6. Verwendung der oligomeren Organosilane gemäß Anspruch 1 in Kautschukmischungen.

7. Kautschukmischungen, enthaltend Kautschuk, Füllstoff, sowie mindestens ein oligomeres Organosilane gemäß Anspruch 1.

8. Verfahren zur Herstellung von Kautschukmischungen, die neben dem Kautschuk mindestens einen weiteren Füllstoff enthalten,
**dadurch gekennzeichnet,**
**daß** ein oligomeres Organosilane gemäß Anspruch 1 vorhanden ist.

9. Formkörper, erhältlich aus einer Kautschukmischung gemäß Anspruch 7.

10. Verwendung von oligomeren Organosilane gemäß Anspruch 1 zur Verbesserung des Abriebs von Kautschukmischungen.

## Claims

1. Oligomeric organosilanes, **characterized in that** they are constructed of the 2 structural units A and B according to the formula I, 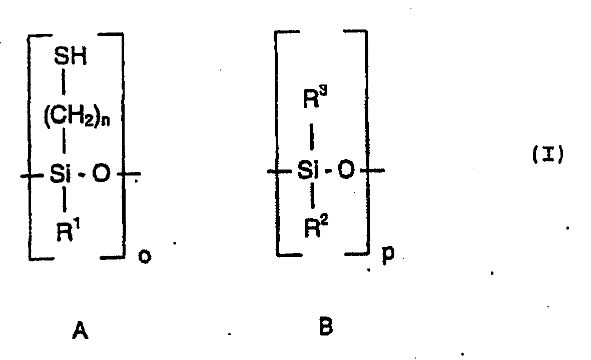 where R¹ and R² are each a (C₁-C₄)alkoxy group,
R³ is a propyl, octyl or hexadecyl group,
n is equal to 1 - 8, and
o and p are each a whole positive number from 1 - 40,
subject to the proviso that p/o is from 0.2/1 to 6/1.

2. Oligomeric organosilanes according to Claim 1, **characterized in that** the oligomeric organosilane has a molecular weight between 200 and 16 000 g/mol.

3. Process for preparing the invention's oligomeric organosilanes according to Claim 1, **characterized in that** the monomeric compounds of the structural types I and II 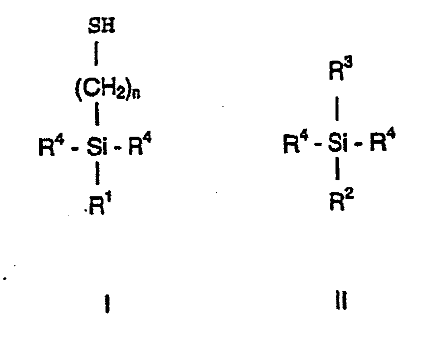 where R¹, R², R³ and n are each as defined above, and
R⁴ is a (C₁-C₄)alkoxy group, each R⁴ being the same or different,
are mixed and subsequently cooligomerized.

4. Process according to Claim 3, **characterized in that** mercaptopropyltriethoxysilane is used as compound of the structural type I.

5. Process according to Claim 3, **characterized in that** propyltriethoxysilane is used as compound of the structural type II.

6. Use of the oligomeric organosilanes according to Claim 1 in rubber mixtures.

7. Rubber mixtures comprising rubber, filler material and also at least one oligomeric organosilane according to Claim 1.

8. Process for producing rubber mixtures comprising, as well as rubber, at least one further, filler material, **characterized in that** an oligomeric organosilane according to Claim 1 is present.

9. Moulded article obtainable from a rubber mixture according to Claim 7.

10. Use of oligomeric organosilanes according to Claim 1 for improving the abrasion of rubber mixtures.

## Revendications

1. Organosilanes oligomères, **caractérisés en ce qu'**ils sont constitués de 2 motifs A et B selon la formule I 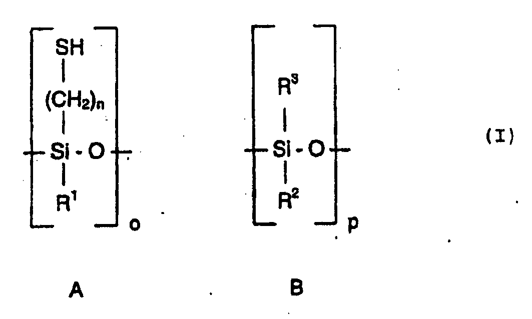 dans laquelle
R¹, R² représentent un groupe alcoxy en C₁-C₄,
R³ représente un groupe propyle, octyle ou hexadécyle,
n va de 1 à 8, et
o et p représentent chacun un nombre entier positif allant de 1 à 40,
p/o allant de 0,2/1 à 6/1.

2. Organosilanes oligomères selon la revendication 1, **caractérisés en ce que** l'organosilane oligomère a une masse moléculaire comprise entre 200 et 16 000 g/mole.

3. Procédé pour la préparation des organosilanes oligomères conformes à l'invention, selon la revendication 1, **caractérisé en ce qu'**on mélange et ensuite co-oligomérise les composés monomères de types structuraux I et II 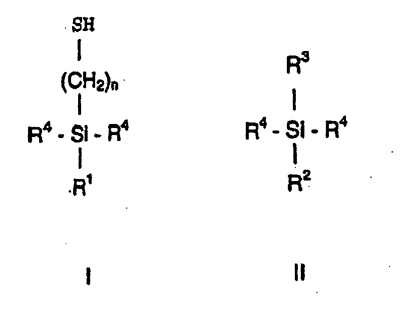 dans lesquels R¹, R², R³ et n ont les significations données plus haut et
R⁴ est un groupe alcoxy en C₁-C₄, R⁴ pouvant être identiques ou différents.

4. Procédé selon la revendication 3, **caractérisé en ce qu'**on utilise en tant que composé de type structural I le mercaptopropyltriéthoxysilane.

5. Procédé selon la revendication 3, **caractérisé en ce qu'**on utilise en tant que composé de type structural II le propyltriéthoxysilane.

6. Utilisation des organosilanes selon la revendication 1, dans des compositions de caoutchouc.

7. Compositions de caoutchouc, contenant du caoutchouc, une charge, ainsi qu'au moins un organosilane oligomère selon la revendication 1.

8. Procédé pour la préparation de compositions de caoutchouc qui, outre le caoutchouc, contiennent au moins une autre charge, **caractérisé en ce qu'**un organosilane oligomère selon la revendication 1 est présent.

9. Corps moulé pouvant être produit à partir d'une composition de caoutchouc selon la revendication 7.

10. Utilisation d'organosilanes oligomères selon la revendication 1, pour l'amélioration de la résistance à l'usure de compositions de caoutchouc.
